# EUROPEAN PATENT APPLICATION

(11) **EP 2 605 509 A2**
(43) Date of publication of application: **19.06.2013**
(21) Application number: 12185555.5
(22) Date of filing: 21.09.2012
(51) Int. Cl.: H04N 5/225

(54) **Improved construction of surveillance camera**

(30) Priority: 16.12.2011 TW 100223823
(71) Applicant: G-STAR International Telecommunications Co., Ltd., Taipei City 114 (TW)
(72) Inventor: Hsu, Min-Chieh, 114 Taipei City (TW)
(74) Representative: Lang, Christian

(57) **Abstract**

This invention relates to an improved surveillance camera, mainly comprising of the surveillance camera body, and with at least one side of this surveillance camera body having a display module and at least one side of the surveillance camera body having a light emitting module, and this display module can be a LCD, LED or OLED display. Through the above construction method, the actions of the light emitting module can clearly show the installation position of the surveillance camera, and it can be understood if the surveillance camera body is operating correctly, and the attached display module can effectively deter unauthorized people, advertise the results, inform of the status and transmit messages thereby increasing the practicality of the surveillance camera.

## Description

### BACKGROUND OF THE INVENTION

### 1. Field of the invention

This invention is a kind of surveillance camera, specifically an improved construction of a surveillance camera able to deter unauthorized people, able to transmit messages and having a highlighted position.

### 2. Description of Related Art

As public security is gradually deteriorating, currently many public places such as residential buildings and even private homes, generally install electronic surveillance devices to better control and manage people, to prevent theft of goods, damaged property and bodily harm by illegal entry and behavior. Installation of surveillance cameras not only decreases expenditure on manpower, but when an accident occurs, the surveillance camera can record the event for the whole duration of the event.

Generally all surveillance cameras sold and used on the market simply have video recording functions, and there is no way to install deterrent capabilities for unauthorized persons on the device.

Additionally, it's very difficult from looking at the outside to clearly see if the surveillance camera is functioning correctly, and very difficult to determine which surveillance camera isn't functioning correctly, and only after an event happens when trying to look at the recording, is it realized that the surveillance camera is broken, resulting in the images not being available.

Therefore the inventor of this invention engaged himself to this industry and related manufacturers to research ways of improvement, to improve and overcome the above mentioned problems and shortcomings.

### SUMMARY OF THE INVENTION

Therefore, in view of the above mentioned defect, the inventor of the present invention has gathered relevant information through multiple assessments and considerations and utilizing many years experience accumulated in this art and through constant testing and modifying has designed a surveillance camera with an improved construction which is able to deter unauthorized people and able to transmit messages.

The main purpose of the present invention is to provide an improved construction of a surveillance camera which is able to deter unauthorized people and able to transmit messages through the configuration of a light emitting module and a display module.

In order to achieve the above goal, the present invention is a surveillance camera with an improved construction including: a surveillance camera body; and a display module set on at least one side of the surveillance camera body, wherein the display module is one selected from the following group consisting of: an LCD, an LED display and an OLED display, wherein the surveillance camera body has a circuit board coupled to the display module for linking information and the surveillance camera body electrically connected to a power supply module.

By means of the above structure, the power supply module provides the needed power to the surveillance camera body, and operational use is shown through the light emitting module and the display module, so as to clearly see and understand the installation location and if the surveillance camera body is operating normally, and which at the same time can inform the photographer of the status, deter unauthorized people, transmit messages and has advertising effectiveness.

### BRIEF DESCRIPTION OF THE DRAWINGS

The invention, as well as its many advantages, may be further understood by the following detailed description and drawings in which:
Fig. 1 is the perspective diagram showing one preferred embodiment of the present invention.
Fig. 2 is the first schematic diagram showing one preferred embodiment of the present invention.
Fig. 3 is the second schematic diagram showing one preferred embodiment of the present invention.
Fig. 4 is the third schematic diagram showing one preferred embodiment of the present invention.
Fig. 5 is the fourth schematic diagram showing one preferred embodiment of the present invention.
Fig. 6A is the first schematic diagram showing another preferred embodiment of the present invention.
Fig. 6B is the second schematic diagram showing another preferred embodiment of the present invention.
Fig. 7 is the third schematic diagram showing another preferred embodiment of the present invention.
Fig. 8 is the fourth schematic diagram showing another preferred embodiment of the present invention.
Fig. 9 is the fifth schematic diagram showing another preferred embodiment of the present invention.
Fig. 10 is the sixth schematic diagram showing another preferred embodiment of the present invention.
Fig. 11 is the seventh schematic diagram showing another preferred embodiment of the present invention.

### DETAILED DESCRIPTION OF THE INVENTION

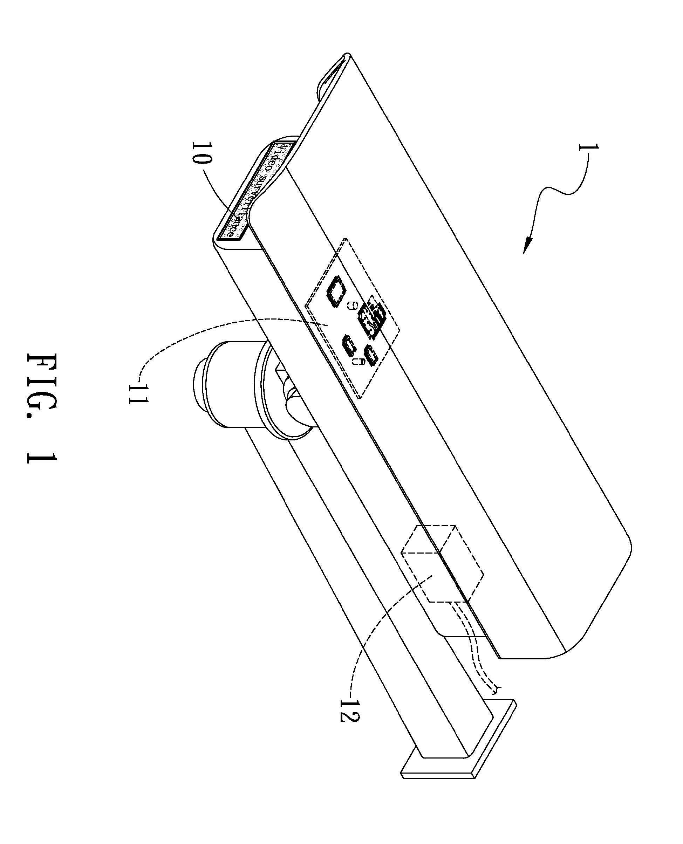

Please refer to Fig. 1, which is the perspective diagram showing one preferred embodiment of the present invention. From the figure, an improved construction of surveillance camera can be clearly viewed, which mainly includes: a surveillance camera body 1; and a display module 10 set on at least one side of the surveillance camera body 1, wherein the display module 10 is one selected from the following group consisting of: an LCD, an LED display and an OLED display, wherein the surveillance camera body has a circuit board 11 coupled to the display module for linking information and the surveillance camera body 1 is electrically connected to a power supply module 12.

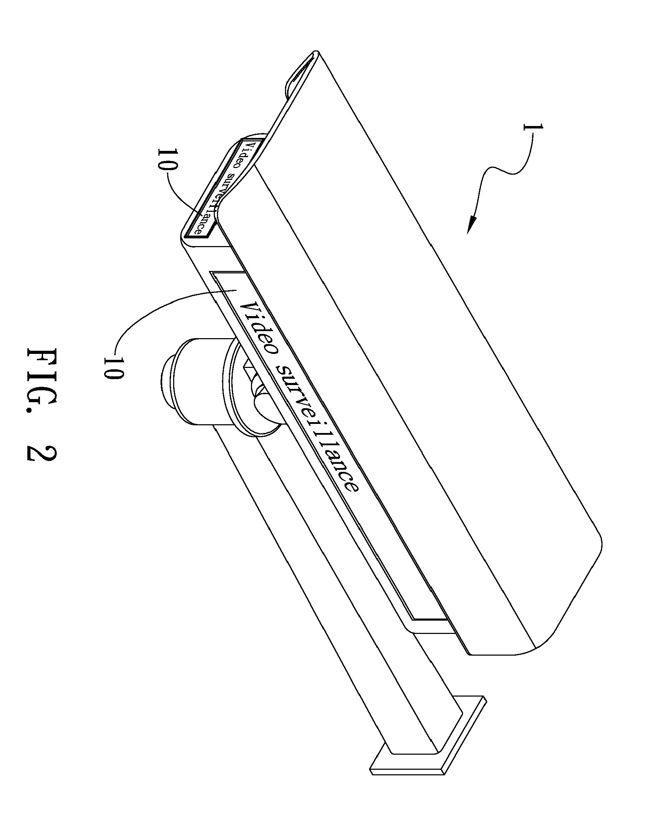

With the above structure and design configuration, the operational use is s as follows. Please refer to Fig. 2~Fig. 5, which are the first- the fourth schematic diagrams showing one preferred embodiment of the present invention, which can be viewed from the figures. For example, the display modules 10 are set on the two sides of the surveillance camera body 1, so when the surveillance camera body 1 is located in a monitoring space and is in operation, the display modules 10 set on the surveillance camera body 1 show light-emitting text, such as "video surveillance", "video recording, please smile", "Welcome".

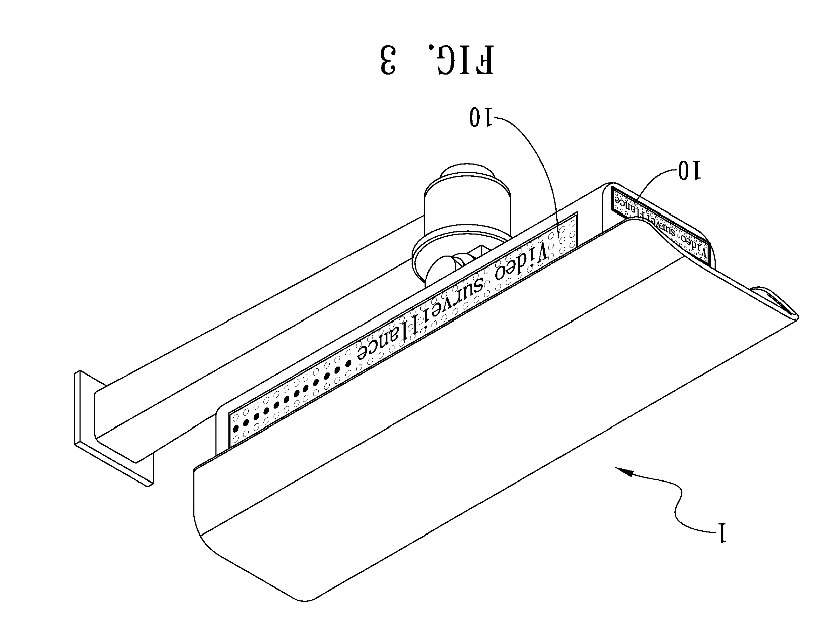

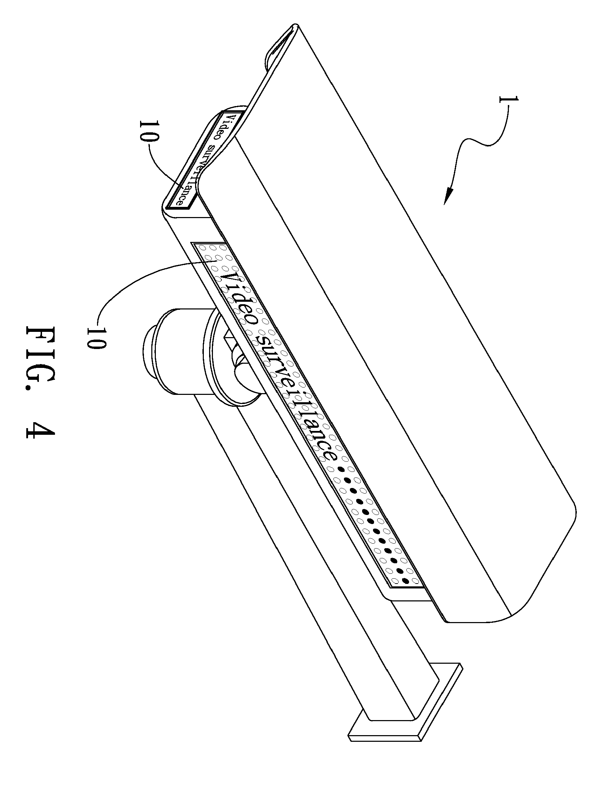

Wherein the display module 10 is one selected from the following group consisting of: an LCD, an LED display and an OLED display, and the display of the display module 10 can be an LCD or OLED display(please also refer to Fig. 2), LED display (Please also refer to Fig.3), or mixed display of an LED display with LCD or OLED display (Please also refer to Fig.4), and thereby the public can recognize the location of the surveillance camera body 1, and camera body 1 is a deterrent for perpetrators.

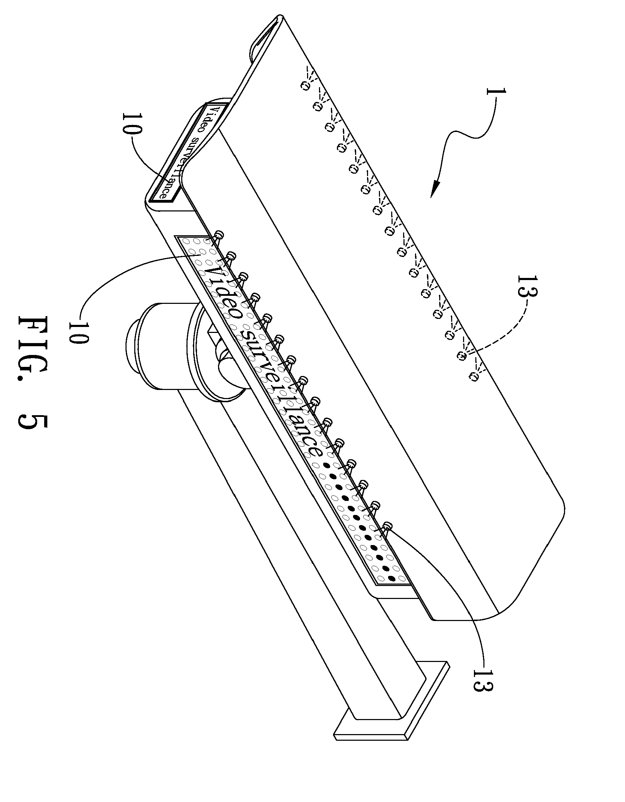

Furthermore, please also refer to Fig. 5, wherein a plurality of light emitting modules 13 (such as light emitting diodes, small light bulb, LED bulbs, etc.) can be set on at least one side of the surveillance camera body 1 mentioned above, , and which work in conjunction with the display module 10, which enables maintenance staff to easily determine whether the surveillance camera body 1 is working or not, and is therefore bright and eye catching, can transmit messages, notify of the status and can advertise the results so as to have increased practical use.

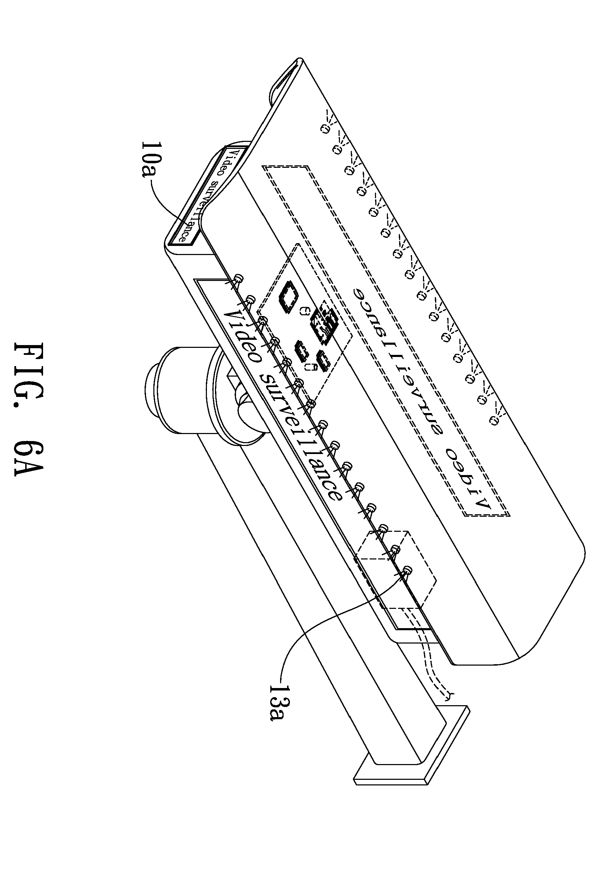

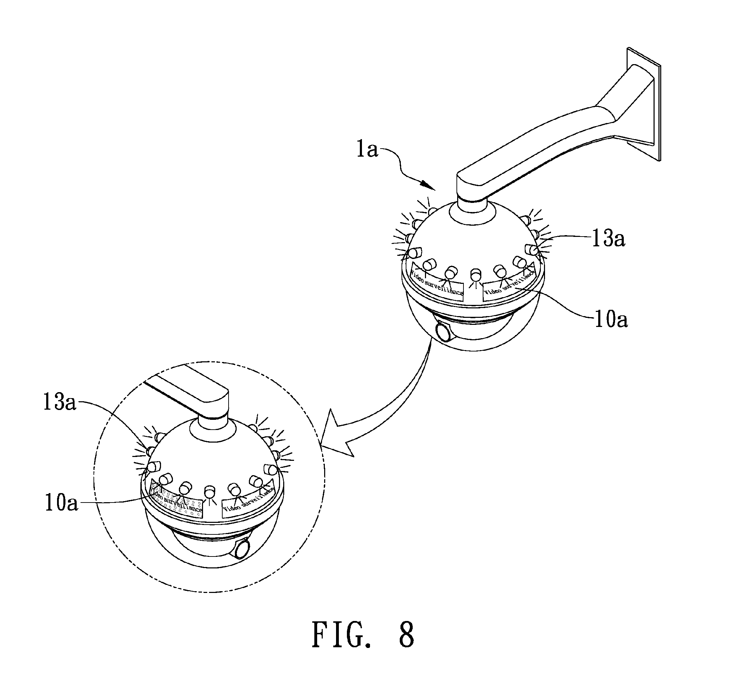

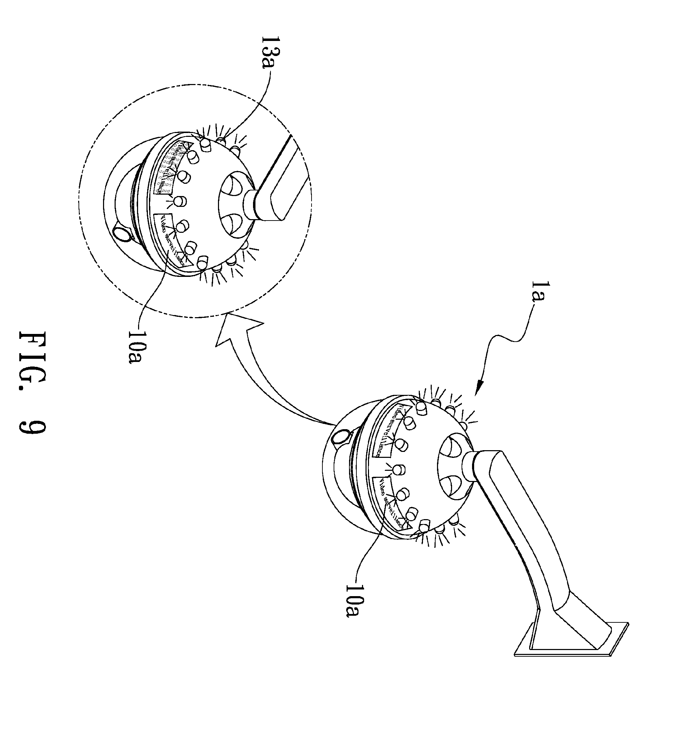

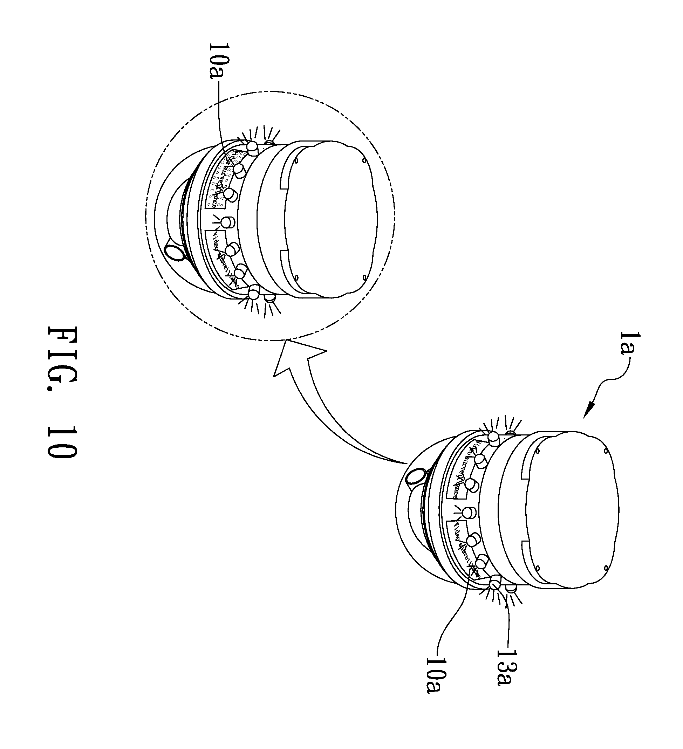

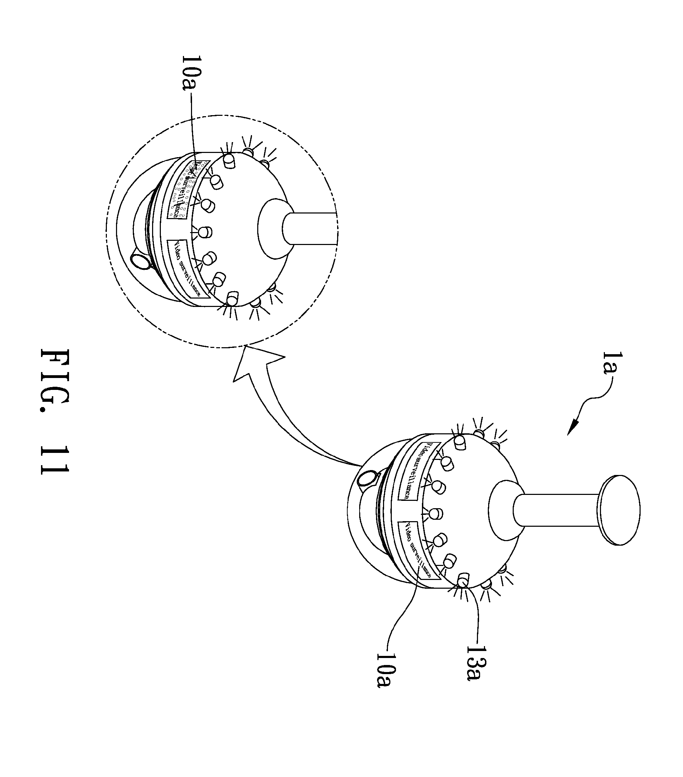

Please refer to Fig. 6A~Fig. 11, which are the first- the seventh schematic diagrams showing another preferred embodiment of the present invention, which can be viewed from the figures. For example, the display modules 10a are set on the three sides of the surveillance camera body 1a, so when the surveillance camera body 1a is located in a monitoring space, and the power required to function is provided by the power supply module 12a, the display modules 10a set on the three sides of the surveillance camera body 1a can show light-emitting text, such as "video surveillance", "video recording, please smile", "Welcome".

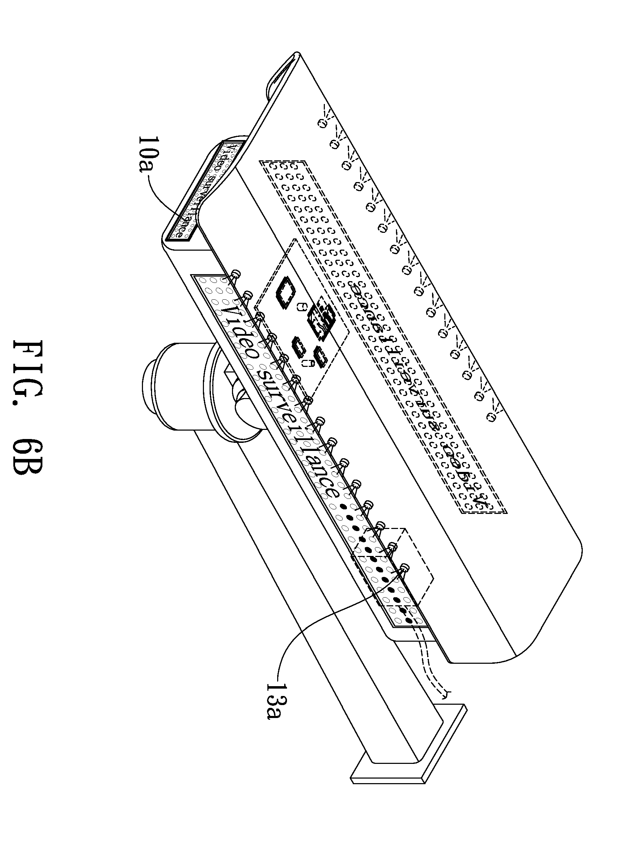

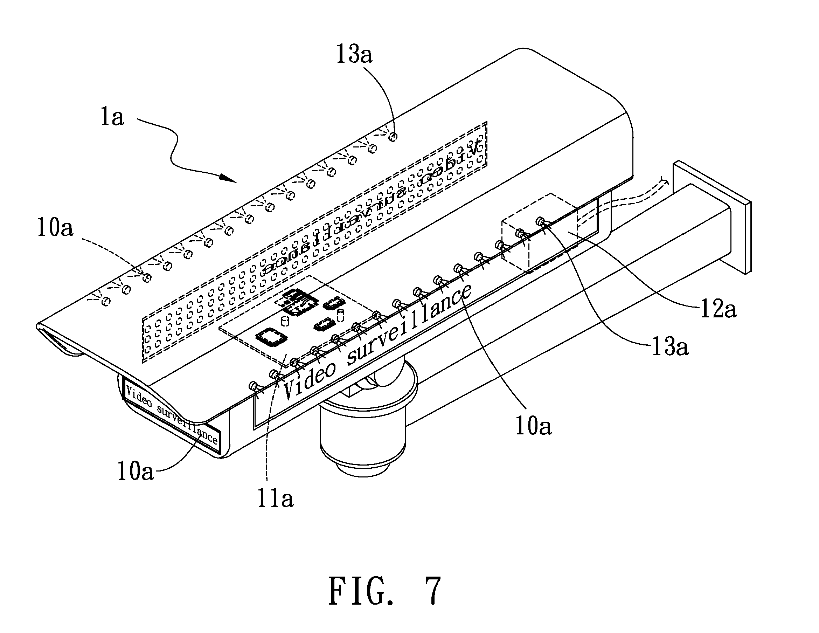

Wherein the display module 10a is one selected from the following group consisting of: an LCD, an LED display and an OLED display, wherein the display module 10a has a circuit board 11 coupled with the display module for linking information, wherein the display of the display module 10a can be the LCD (please also refer to Fig. 6A), LED display (Please also refer to Fig. 6B), or mixed display by LED with LCD or OLED (Please also refer to Fig. 7~Fig. 11).

Thereby being a deterrent for perpetrators, and through the display on light emitting module 13a (such as light-emitting diodes, a small light bulb, LED bulbs) and display module 10a, maintenance staff can easily determine whether the camera body 1a is broken or not, and from the above described operation and embodiments it's easy to understand this invention is bright and eye catching, can transmit messages, notify of the status and can advertise the results so as to have increased practical use.,

Many changes and modifications in the above described embodiment of the invent ion can, of course, be carried out without departing from the scope thereof. Accordin gly, to promote the progress in science and useful arts, the invention is disclosed and is intended to be limited only by the scope of the appended claims.

Therefore, please refer to all the figures, and when comparing the present inventi on in use with conventional technology, there are the following advantages:
the display module 10 and the light emitting module 13 of the surveillance camer a body 1 (such as light emitting diodes, small light bulbs, LED light bulbs) are set to achieve the practical purpose of being bright and eye-catching, can transmit messages, and notify of the status for convenient maintenance and can advertise the results so as to have increased practical use.

## Claims

1. An improved construction of surveillance camera, comprising:
a surveillance camera body; and
a display module set at at least one side of the surveillance camera body.

2. The improved construction of surveillance camera as recited in claim 1, wherein the display module is one selected from the following group consisting of: an LCD, an LED display and an OLED display.

3. The improved construction of surveillance camera as recited in claim 1, wherein the surveillance camera body has a circuit board coupled with the display module for information links.

4. The improved construction of surveillance camera as recited in claim 1, wherein the surveillance camera body is electrically connected to a power supply module.

5. An improved construction of surveillance camera, comprising:
a surveillance camera body;
a display module set on at least one side of the surveillance camera body; and
at least one light emitting module set on the at least one side of the surveillance camera body.

6. The improved construction of surveillance camera as recited in claim 5, wherein the display module is one selected from the following group consisting of: an LCD, an LED display and an OLED display.

7. The improved construction of surveillance camera as recited in claim 5, wherein the surveillance camera body has a circuit board coupled to the display module for linking information.

8. The improved construction of surveillance camera as recited in claim 5, wherein the surveillance camera body is electrically connected to a power supply module.
